# EUROPÄISCHE PATENTSCHRIFT

(11) **EP 1 394 461 B1**
(45) Veröffentlichungstag und Bekanntmachung des Hinweises auf die Patenterteilung: **16.03.2005**
(21) Anmeldenummer: 03014877.9
(22) Anmeldetag: 30.06.2003
(51) Int. Cl.: F16L 37/091, F16L 37/092, F16L 19/04

(54) **Rastring für ein Steckfitting**
Locking ring for a plug-in connector for a pipe
Bague à fermeture pour un raccord mâle et femelle pour des tubes

(30) Priorität: 22.08.2002 DE 10238549
(43) Veröffentlichungstag der Anmeldung: 03.03.2004
(73) Patentinhaber: Poloplast GmbH, 87640 Ebenhofen (DE)
(72) Erfinder: Birke, Karl, 87640 Bissenhofen (DE); Schleich, Andreas, 82380 Peissenberg (DE); Stelzer, Robert, 87600 Kaufbeuern (DE)
(74) Vertreter: Weber, Joachim, Dr.

(56) Entgegenhaltungen:
- EP-A- 0 596 394
- EP-A- 0 655 577
- EP-A- 0 667 481
- US-A- 3 744 824

## Beschreibung

Die Erfindung bezieht sich auf einen Rastring gemäß den Merkmalen des Oberbegriffs des Hauptanspruchs. Ein solcher Rastring ist z.B. aus EP 0 655 577 A2 bekannt.

Die Erfindung bezieht sich somit auf einen Rastring, welcher bei einem Steckfitting oder einem Rohrverbinder einsetzbar ist. Diese weisen jeweils eine Durchgangsausnehmung auf, die in einem Grundkörper vorgesehen ist und durch welche ein Medium strömen kann. Weiterhin ist eine Einsteckausnehmung für einen Endbereich eines Rohres vorgesehen. Die zum Halten des Rohres (oder auch eines Schlauches) erforderlichen Haltemittel werden durch den Rastring gebildet.

Der Stand der Technik zeigt unterschiedlichste Ausgestaltungen derartiger Rohrverbinder oder Steckfittinge.

Bei Steckfittingen, so wie diese aus dem Stand der Technik bekannt sind, ist es möglich, das Rohrende einzuschieben, um es entsprechend zu verrasten. Hierzu sind metallische Sperrklinken oder Ähnliches vorgesehen, die zum einen beim Einschieben des Rohrs verformt werden und sich zum anderen beim Aufbau eines Innendrucks in die Außenwandung des Rohrs eindrücken.

Als nachteilig erweist sich bei diesen Konstruktionen, dass es nicht möglich ist, das Rohr nachträglich von dem Steckfitting oder Rohrverbinder wieder zu lösen. Ist eine Fehl-Installation vorgenommen worden, so ist es erforderlich, den Steckfitting mitsamt dem Rohrende zu entfernen. Der Steckfitting ist nicht mehr verwendbar. Durch das Kürzen des Rohres entstehen weitere Probleme bei der Installationsarbeit.

Der Stand der Technik zeigt auch einzelne Konstruktionen, bei welchen ein nachträgliches Lösen des Rohres möglich ist.

Derartige Steckfittinge können bei Druckleitungen unterschiedlichster Art, beispielsweise im Heizungsbau oder bei der Wasserversorgung, eingesetzt werden. Die Rohre können in Form einfacher Kunststoffrohre ausgebildet sein, es ist jedoch auch möglich, ummantelte Rohre zu verwenden.

Aus der EP 0 655 577 A2 ist ein Steckfitting mit einem Rastring vorbekannt, wobei der Rastring geschlitzt und so ausgebildet ist, dass die beiden Enden in Axialrichtung zueinander beabstandet sind. Der Rastring weist an seinem Innenumfang eine Schneide auf, welche durch einzelne Schlitze in Spitzen unterteilt ist. Beim Einsetzen dieses Rastrings in einen Steckfitting wird die mit den Spitzen versehene Schneide in den Außenumfang eines Rohres eingedrückt.

Eine weitere Rohrsteckverbindung zeigt die EP 0 667 481 A1. Dabei wird ein einstückig aus Kunststoff gefertigter Klemmring verwendet, welcher offen ist und einen weiten Umfangsbereich ausspart. An dem Ringkörper sind in Form eines doppelseitigen Hebels Krallen und Lappen angeordnet. Die Lappen werden beim Einschieben eines Rohres nach außen bewegt, wodurch die Krallen sich in Richtung auf die Oberfläche des Rohres bewegen und in diese Oberfläche eingedrückt werden.

Der Erfindung liegt die Aufgabe zugrunde, einen Rastring der eingangs genannten Art zu schaffen, welcher bei einfachem Aufbau und einfacher Anwendung kostengünstig herstellbar ist und welcher ein hohes Maß an Betriebssicherheit aufweist.

Erfindungsgemäß wird diese Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass der Rastring einen mit einem im Wesentlichen kreisförmigen Querschnitt versehenen, durch Torsion verformbaren Ringkörper umfasst, an welchem zum Innenraum des Ringkörpers weisende Krallen angeordnet sind und dass die Kralle mit zumindest einer im Wesentlichen in der Ebene des Ringkörpers angeordneten Schneide versehen ist.

Der erfindungsgemäße Rastring zeichnet sich durch eine Reihe erheblicher Vorteile aus.

Durch die Verwendung des erfindungsgemäßen Rastringes ist es möglich, eine besonders kostengünstig und einfach herzustellende Verrastung mit einem kurzen Wirk- oder Rastweg vorzusehen. Der Rastring weist einen mit einem Kreisquerschnitt versehenen Ringkörper auf, an welchem, zum Innenraum des Ringkörpers weisend, die Krallen angeordnet sind. Beim Einschieben des Rohres wird somit der Rastring um seine ringförmige Mittelachse gedreht, sodass die Krallen verschwenkt werden können. Der Rastring wird somit in gewissem Maße umgestülpt. Durch diese Konstruktion ist es möglich, den Rastring aus Kunststoff zu fertigen. Durch die Umstülpung oder Verformung um die ringförmige Mittelachse wird verhindert, dass die einzelnen Krallen brechen können. Die Krallen selbst werden somit nicht relativ zu dem Ringkörper verformt oder bewegt, vielmehr wird der gesamte Ringkörper in sich gedreht. Beim Einschieben des Rohrs erfolgt somit ein Abstreifen oder Entlangstreifen an dem Rastring bzw. an dessen Krallen.

Der erfindungsgemäße Rastring ist, wie erwähnt, so ausgebildet, dass sein Ringkörper mit Krallen versehen ist. Der Ringkörper wird somit durch Torsion in sich verdreht, wenn ein Rohr eingeschoben wird. Hierbei werden die Krallen des Ringkörpers verdreht, diese gleiten somit an der Oberfläche des Rohrs entlang. Nachdem dieses vollständig eingeschoben wurde, führt bereits eine geringfügigste Rückbewegung des Rohres (beispielsweise durch einen Druckanstieg im System) dazu, dass sich die Krallen in die Oberfläche des Rohres einschneiden.

Besonders günstig ist es, wenn bei einem Fitting zwei mittels einer Distanzhülse voneinander beabstandete erfindungsgemäße Rastringe vorgesehen sind. Die Distanzhülse ist somit ebenfalls in dem Freiraum angeordnet und fixiert die beiden Rastringe in einem vorgegebenen Abstand innerhalb der Rasthülse. Hierdurch wird ein sicheres Halten und Verankern des Rohrendes gewährleistet.

Um den Steckfitting nach seiner Montage auf einfache Weise von dem Rohrende demontieren zu können, kann es besonders günstig sein, wenn radial innerhalb der Distanzhülse eine mit den Krallen der Rastringe in Kontakt befindliche Schiebehülse angeordnet ist. Mittels eines geeigneten Werkzeuges ist es somit möglich, den äußeren Rastring in sich zu verdrehen. Hierdurch wird die Schiebehülse verschoben und führt zu einer entsprechenden Verdrehung des anderen Rastrings. Somit können beide Rastringe in ihre Entriegelungsstellung gebracht werden, um das Rohrende abzuziehen. Die Rastringe werden dabei ebensowenig beschädigt wie die an diesen vorgesehenen Krallen.

Der erfindungsgemäße Rastring ist hinsichtlich seiner Konstruktion so ausgebildet, dass sämtliche Teile bevorzugterweise aus Kunststoff oder aber auch aus Metall gefertigt werden können. Dies erniedrigt zum einen die Herstellungskosten ganz erheblich. Zum anderen kann bei Verwendung von Kunststoff jede Art von Korrosionsproblemen vermieden werden.

Im Folgenden wird die Erfindung anhand von Ausführungsbeispielen in Verbindung mit der Zeichnung beschrieben. Dabei zeigt:
- Fig. 1: eine Längs-Schnittansicht eines mit dem erfindungsgemäßen Rastring versehenen Steckfittings mit einem montierten Rohrende,
- Fig. 2: eine Seitenansicht, nicht im Schnitt, eines Steckfittings mit zwei montierten Rohrenden,
- Fig. 3: eine Seitenansicht, analog den Fig. 1 und 2, eines Steckfittings mit entfernten Rasthülsen,
- Fig. 4: eine Seitenansicht einer Rasthülse,
- Fig. 5: eine perspektivische Teil-Schnittansicht der Anordnung analog Fig. 1,
- Fig. 6: eine perspektivische Teil-Schnittansicht mit Rasthülse, Rastringen, Distanzhülse und Schiebehülse,
- Fig. 7: eine Ansicht, ähnlich Fig. 6,
- Fig. 8: eine perspektivische Darstellung eines Ausführungsbeispiels des erfindungsgemäßen Rastrings,
- Fig. 9: eine andere perspektivische Darstellung des in Fig. 8 gezeigten Rastrings,
- Fig. 10: eine Draufsicht auf den in den vorangegangenen Figuren gezeigten Rastring,
- Fig. 11: eine Schnittansicht längs der Linie XI-XI von Fig. 10,
- Fig. 12: eine vereinfachte Teil-Seitenansicht unter Darstellung des Vorgangs des Einschiebens des Rohres in einen Rastring,
- Fig. 13: eine Darstellung, analog Fig. 12, mit verrastetem Rastring,
- Fig. 14: eine perspektivische Darstellung eines Ausführungsbeispiels eines Werkzeugs zum Lösen des Steckfittings von einem Rohrende,
- Fig. 15: eine Ansicht, analog Fig. 7, mit jedoch nur einem Rastring,
- Fig. 16: eine Schnittansicht eines weiteren Ausführungsbeispiels ohne Rohrstutzen 5 und mit nur einem Rastring,
- Fig. 17: ein Ausgestaltungsbeispiel, analog Fig. 16, jedoch mit zwei Rastringen,
- Fig. 18: eine Schnittansicht eines Ausführungsbeispiels mit Verschlusskappe,
- Fig. 19: eine perspektivische Ansicht des in Fig. 18 gezeigten Ausführungsbeispiels,
- Fig. 20: eine perspektivische Ansicht eines weiteren Ausführungsbeispiels mit Verschlussfolie,
- Fig. 21: eine Darstellung der Klickscheibe im Ausgangszustand, und
- Fig. 22: eine Darstellung der Klickscheibe im verformten Zustand.

In den Zeichnungen sind gleiche Teile jeweils mit gleichen Bezugsziffern versehen.

Die nachfolgende Figurenbeschreibung erläutert verschiedene Ausgestaltungsformen von Steckfittingen, um dabei die Verwendung des erfindungsgemäßen Rastrings besser erläutern zu können, um vorteilhafte Anwendungsmöglichkeiten des erfindungsgemäßen Rastrings aufzuzeigen und um dessen Wirkungsweise präziser beschreiben zu können.

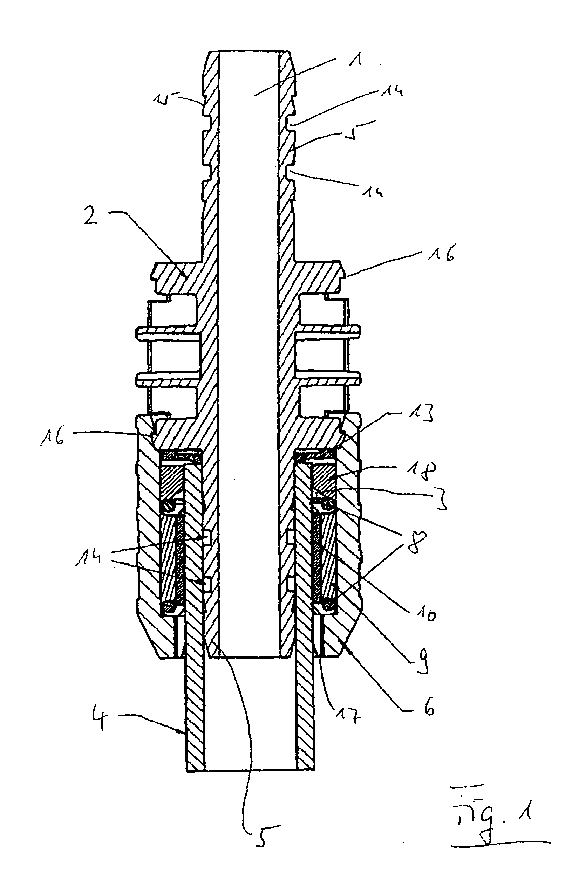

Die Fig. 1 zeigt eine Längs-Schnittansicht eines erfindungsgemäßen Steckfittings. Dieser weist einen Grundkörper 2 auf, an welchem einstückig beidseitig jeweils Rohrstutzen 5 ausgebildet sind. Sowohl die Rohrstutzen 5 als auch der Grundkörper 2 weisen eine Durchgangsausnehmung 1 auf. An dem Rohrstutzen 5 sind zwei Ringnuten 14 ausgebildet, in welche nicht dargestellte O-Ringe einlegbar sind.

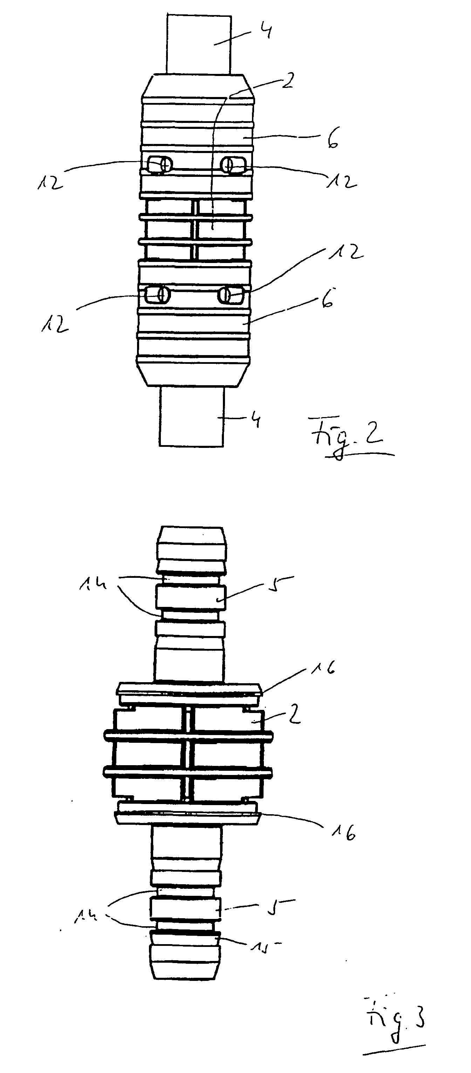

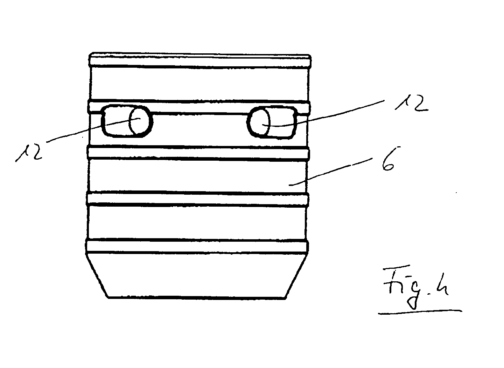

Die Rohrstutzen 5 können weiterhin mit Krallringen 15 (Fig. 3) versehen sein, welche eine zusätzliche Verankerung der Innenwandung eines Rohrs 4 ermöglichen.

Wie aus der Fig. 1 ersichtlich, ist auf die beiden Endbereiche des Grundkörpers 2 jeweils eine Rasthülse 6 aufsteckbar, welche mittels Rastmitteln 16 gehalten wird.

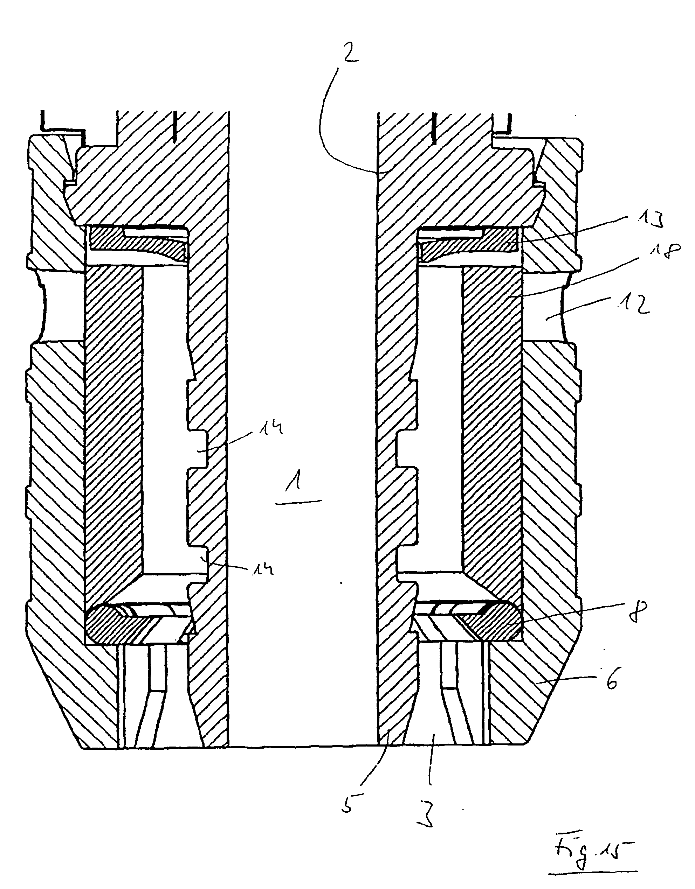

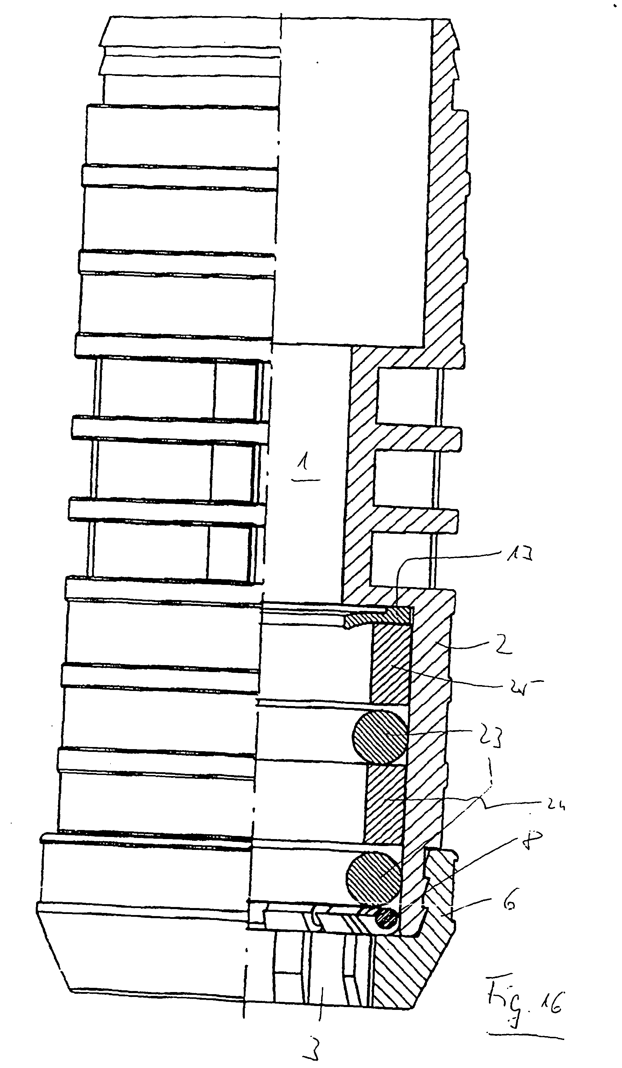

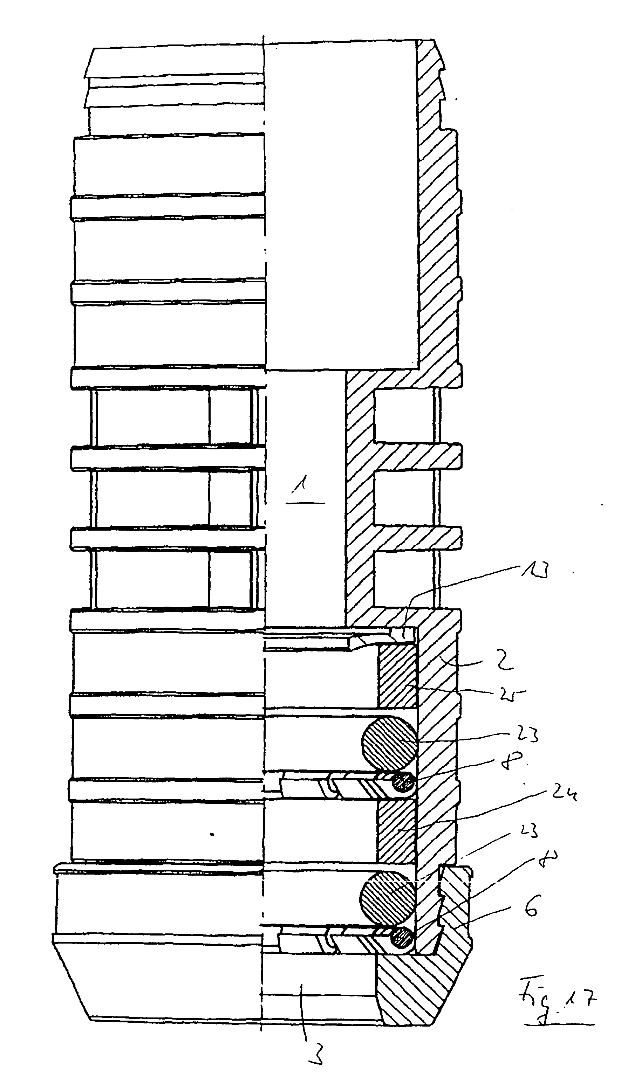

Die Rasthülse 6 weist einen Innendurchmesser auf, welcher mit dem Außendurchmesser des Rohrs 4 eine Einsteckausnehmung 3 bildet. Das freie Ende des Rohrs 4 ist somit in diese Einsteckausnehmung 3 einschiebbar. Das freie Ende der Rasthülse 6 ist mit einer Ausnehmung 17 versehen, welche so bemessen ist, dass ein in Zusammenhang mit Fig. 14 noch zu beschreibendes Werkzeug 11 einschiebbar ist.

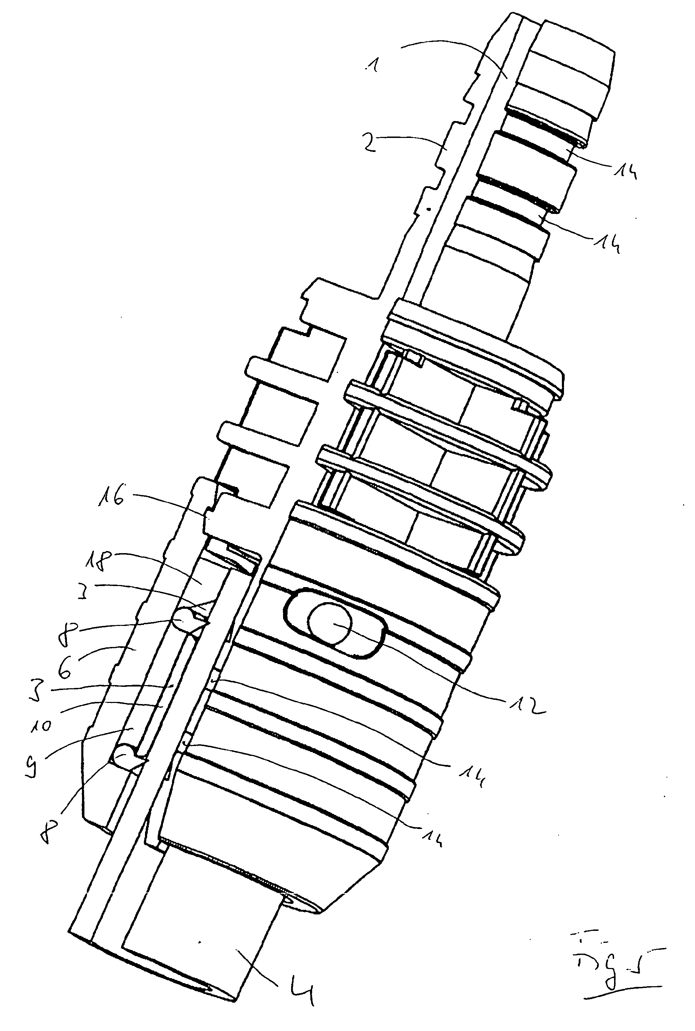

Die Rasthülse 6 ist mit mehreren Sichtfenstern 12 versehen (siehe beispielsweise Fig. 2 und 4). Durch die Sichtfenster 12 ist eine optische Kontrolle der korrekten Montage des Rohrs 4 möglich). Mittels eines transparenten Fensterrings wird ein Eindringen von Staub oder sonstigen Verschmutzungen verhindert.

Am stirnseitigen Endbereich des Freiraums 3 ist im montierten Zustand eine kreisringförmige Klick-Scheibe angeordnet. Diese wird beim Einschieben des Rohres 4 verformt und verursacht ein Klick-Geräusch.

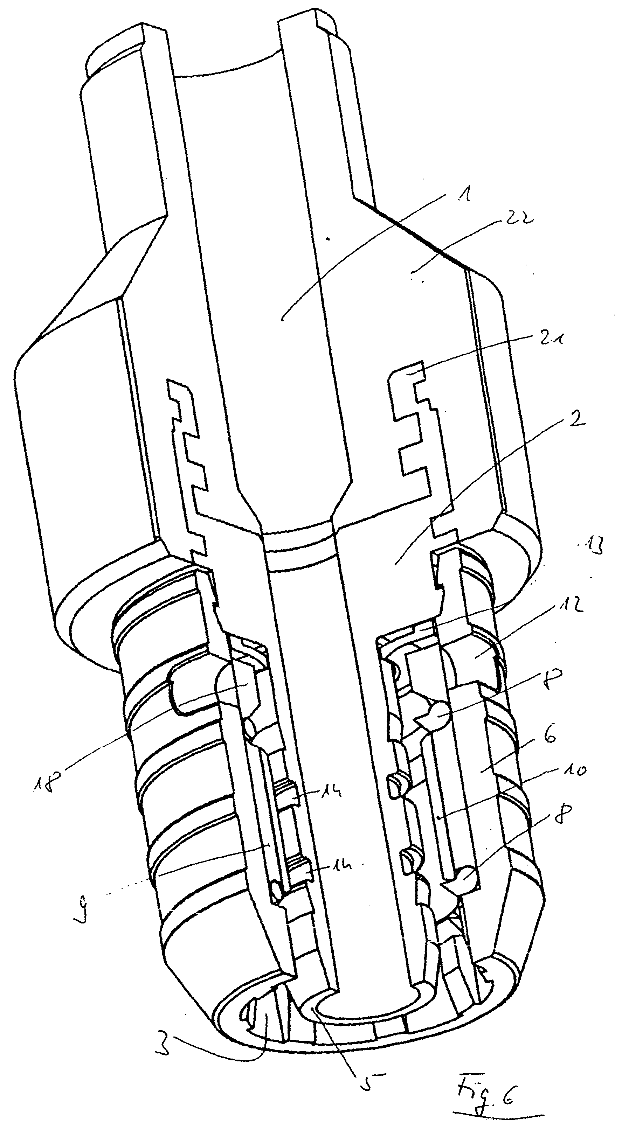

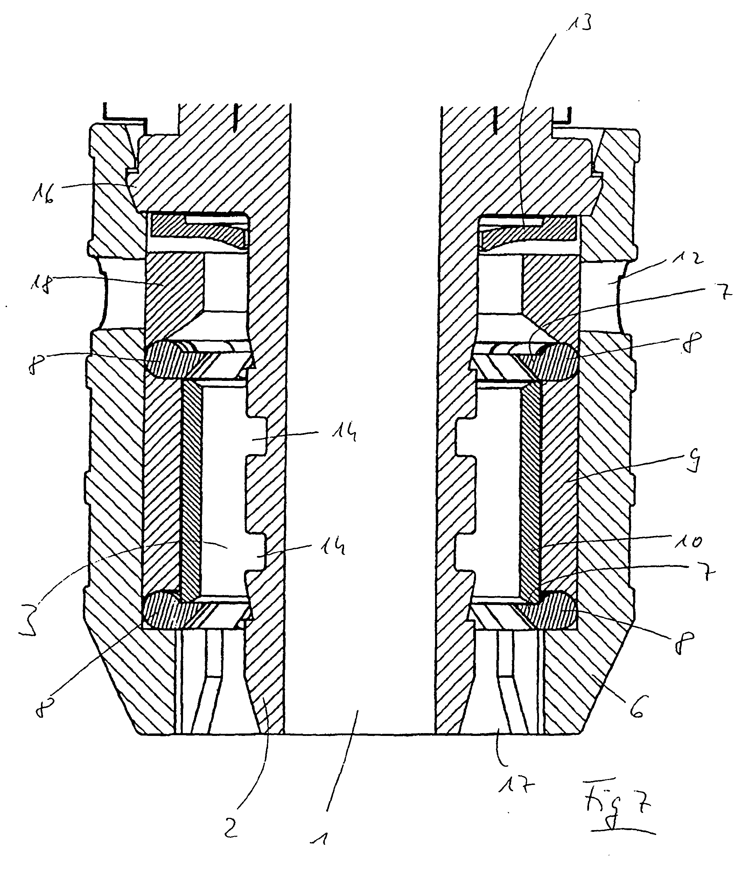

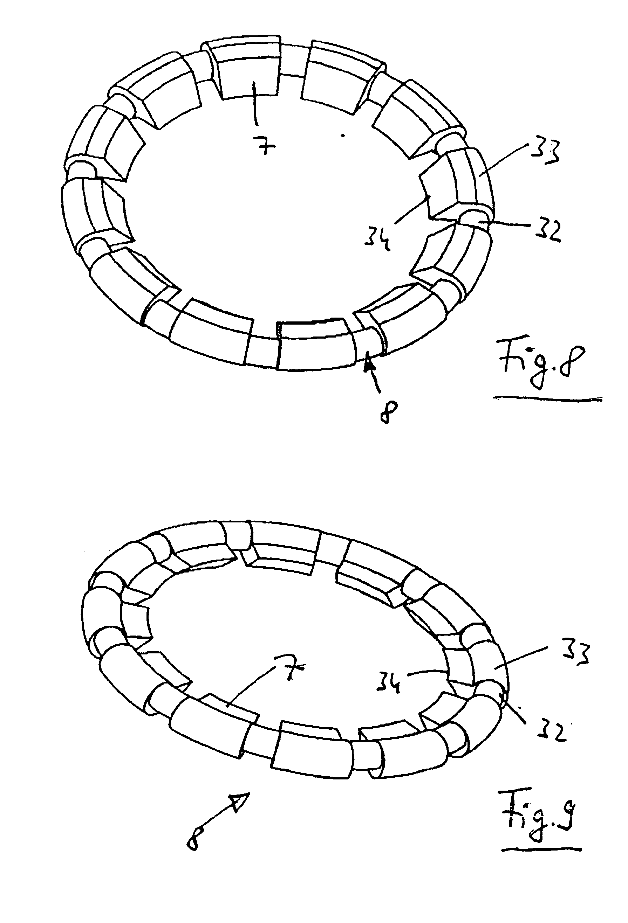

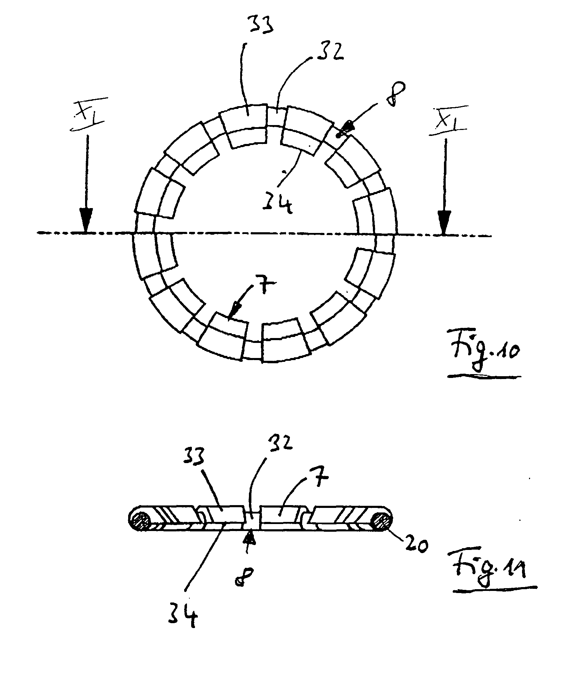

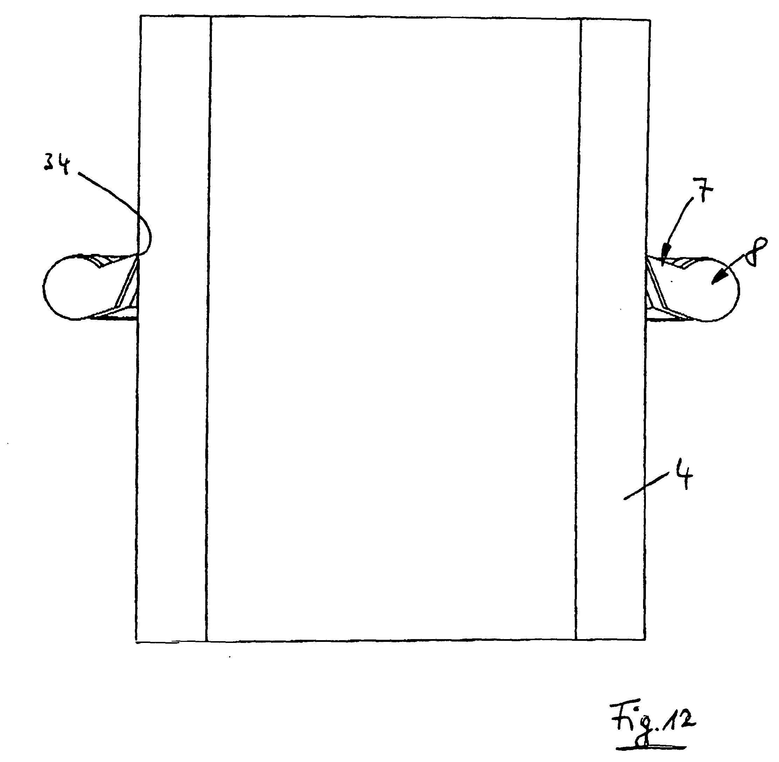

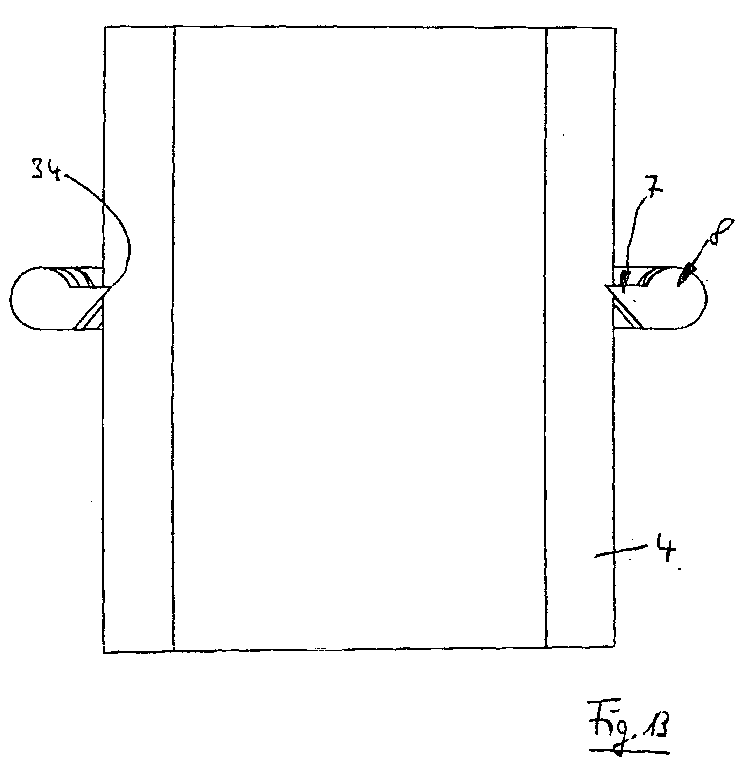

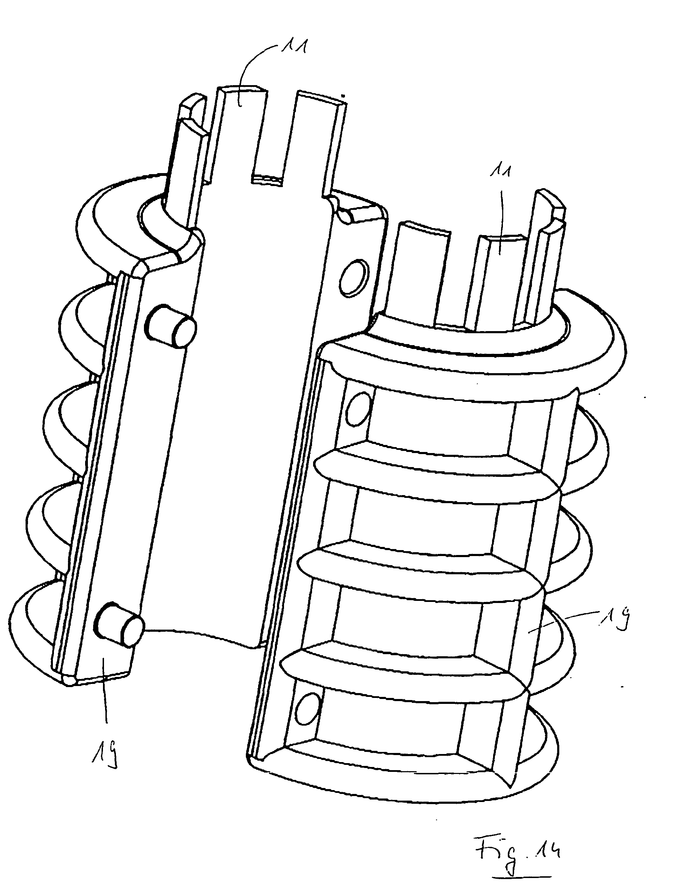

Wie die Abbildungen 1, 5, 6 und 7 im Einzelnen zeigen, sind in den Freiraum 3 zwei Rastringe 8 eingesetzt, welche jeweils mit Krallen 7 versehen sind. Die Rastringe 8 werden nachfolgend in Zusammenhang mit den Fig. 8 bis 11 im Einzelnen beschrieben.

Zur Beabstandung der Rastringe 8 dient eine Distanzhülse 9. Im inneren Freiraum der Distanzhülse 9 ist eine Schiebehülse 10 angeordnet, welche sich in Anlage an die Krallen 7 der Rastringe 8 befindet. Durch die an einem Handstück 19 gelagerten stiftartigen Werkzeuge 11 ist es möglich, die Schiebehülse 10 zu verschieben. Hierdurch werden die Rastringe 8 um ihre ringförmige Mittelachse verdreht, wodurch die Krallen 7 nach oben bewegt werden. Somit ist ein nachträgliches Lösen eines montierten Steckfittings möglich. Wie die Fig. 14 zeigt, ist das Werkzeug, ebenso wie die Handstücke 19, zweiteilig ausgebildet, um auf das Rohr 4 aufgesteckt und nachfolgend verschoben werden zu können.

Die Fig. 8 bis 11 zeigen jeweils die Konstruktion und den Aufbau des erfindungsgemäßen Rastrings 8. Dieser weist einen ringförmigen Ringkörper 20 auf, an dem die Krallen 7 einstükkig ausgebildet sind. Die Krallen 7 sind jeweils mit einer an ihrem vorderen Ende ausgebildeten Schneide versehen. Im Übrigen sind die Krallen 7, so wie dies insbesondere aus den Darstellungen der Fig. 8 und 9 ersichtlich ist, an einer Seite abgeschrägt.

Wie insbesondere aus den Fig. 8 bis 13 ersichtlich ist, weist der erfindungsgemäße Rastring 8 einen Ringkörper auf, der toroid-förmig ausgebildet ist und einen kreisförmigen Querschnitt hat. Diese Grundform des Grundkörpers findet sich bei Zwischenbereichen 32. Diese Zwischenbereiche 32 sind jeweils durch Torsion verformbar, wenn die Krallen 7 verschwenkt werden, so wie sich dies beispielsweise aus der Darstellung der Fig. 12 und 13 ergibt. Die Zwischenbereiche 32 bilden somit einen Teil des vorangehend allgemein mit dem Bezugszeichen 20 versehenen Ringkörpers. Durch den Querschnitt der Zwischenbereiche 32, welche den eigentlichen Torsionsring bilden, ergibt sich die Torsionssteifigkeit. Die Breite der Zwischenbereiche 32 definiert die wirksame Torsions- oder Verformungslänge. Durch geeignete Auswahl des Werkstoffes ergibt sich die Torsionskraft oder Rückstellkraft, durch welche die Schneiden 34 gegen die Oberfläche des Rohres 2 gepresst oder angelegt werden.

Bei einer Ausgestaltung aus Kunststoff sind einstückig mit dem Ringkörper mit den Schneiden 34 versehene Bereiche 33 ausgebildet. Diese haben einen größeren Durchmesser oder einen größeren Querschnitt, so dass diese nicht durch Torsion verformbar sind oder zumindest eine geringere Verformung mitmachen. An diesen Bereichen 33, welche gleichmäßig über den Umfang des Rastrings 8 verteilt sind, ist jeweils eine Schneide 34 ausgebildet. Wie sich beispielsweise aus der Darstellung der Fig. 8 und 9 ergibt, sind die Schneiden 34 jeweils in einer senkrecht zur Mittelachse des Rastrings 8 angeordneten Ebene ausgebildet, sie sind jedoch in der Draufsicht (siehe beispielsweise Fig. 10) bogenförmig ausgestaltet, so dass die Schneiden 34 auf einem Kreis liegend angeordnet sind. Hierdurch können sich die Schneiden 34 über ihre gesamte Länge gleichmäßig in die Oberfläche des Rohres (bzw. eines Schlauches) einkrallen oder einschneiden, so wie dies in Fig. 13 dargestellt ist.

Wie sich aus der Darstellung der Rastringe ergibt, weisen diese jeweils einen Grundkörper auf, der ringförmig ausgebildet ist und einen Kreisquerschnitt hat. Es liegt somit eine Toroid-Form vor. Die Krallen 7 können sowohl einstückig mit dem Grundkörper des Rastrings 8 ausgebildet sein, es ist auch möglich, diese aus einem anderen Material zu formen. Erfindungsgemäß ist es möglich, den Rastring vollständig aus Kunststoff herzustellen. Er kann jedoch auch vollständig aus Metall gefertigt sein. Als weitere Variante ist es erfindungsgemäß möglich, den Rastring, d.h., den toroid-förmigen Grundkörper aus Kunststoff und die Krallen 7 aus Metall zu fertigen.

Die Fig. 12 und 13 zeigen den Vorgang des Einschiebens eines Rohrs 4 durch einen Rastring 8. Wie sich aus der Fig. 12 ergibt, führt das Einschieben des Rohres zu einer Anlage an die abgeschrägte Seite der Kralle 7. Hierdurch wird der gesamte Rastring 8 in sich verdreht oder gestülpt. Die Krallen 7 bewegen sich somit (gemäß der Abbildung 12, bei welcher das Rohr von unten eingeschoben wird) nach oben. Bei einem nachfolgenden Druckaufbau wird das Rohr geringfügig nach unten gezogen. Dies führt zu einer Verdrehung oder Stülpung des Rastrings 8. Hierdurch werden die Krallen 7 in die Oberfläche des Rohrs 4 eingepresst und verankern dieses. Diese Position ist beispielsweise auch in den Fig. 1, 5 und 7 ersichtlich.

Es versteht sich, dass der erfindungsgemäße Rastring auch für andere Einsatzzwecke als für den beschriebenen Steckfitting verwendbar ist. So ist es auch möglich, den Rastring beispielsweise bei Rohrmuffen oder Ähnlichem einzusetzen, bei denen ein Rohr kleineren Durchmessers in ein Rohr größeren Durchmessers eingesetzt wird. Hierdurch kann der Rastring beispielsweise in einer Sicke oder Nut des größeren Rohrs aufgenommen sein (bezüglich des die Zwischenbereiche 32 bildenden Ringkörpers). Um den Rastring einzusetzen, kann dieser geschlitzt sein, so dass er auf einen kleineren Außendurchmesser zusammengelegt werden kann und dann innerhalb der Nut oder Sicke sich wieder erweitert. Eine andere Alternative besteht darin, die Zwischenbereiche 32 aus einem weicheren Material oder mit einem etwas geringeren Durchmesser auszubilden, so dass der Rastring 8 zum Einsetzen zusammengelegt, verformt oder zusammengedrückt werden kann.

Bei der Verschwenkung der Krallen 7, relativ zu dem toroid-förmigen Grundkörper des Rastrings 8, wird letzterer, abhängig von der Dimensionierung und der Materialauswahl, an den Übergangsbereichen zu den Krallen 7 auf Torsion beansprucht. Hierdurch ergibt sich die Federwirkung der Krallen 7 relativ zu dem Grundkörper des Rastrings (Torsionsrings) 8.

Es versteht sich, dass der erfindungsgemäße Steckfitting symmetrisch aufgebaut sein kann, sodass beidseitig Rohre 4 an den Rohrstutzen 5 befestigt werden können. Es ist auch möglich, den Fitting an einem weiteren Bauelement einstückig zu befestigen, beispielsweise an einer Verzweigung, einem T-Stück, einer Armatur oder Ähnlichem.

Ein derartiges Ausführungsbeispiel zeigt beispielsweise die Fig. 6. Dort ist der Grundkörper 2 an seinem hinteren Endbereich 21 mit einer Schweißmuffe 22 verbunden bzw. in diese eingespritzt bzw. von dieser umspritzt. Aus diesem Grunde weist der hintere Endbereich 21 die dargestellte Kontur auf. Die Schweißmuffe 22 ist aus einem schweißbaren Kunststoff gefertigt.

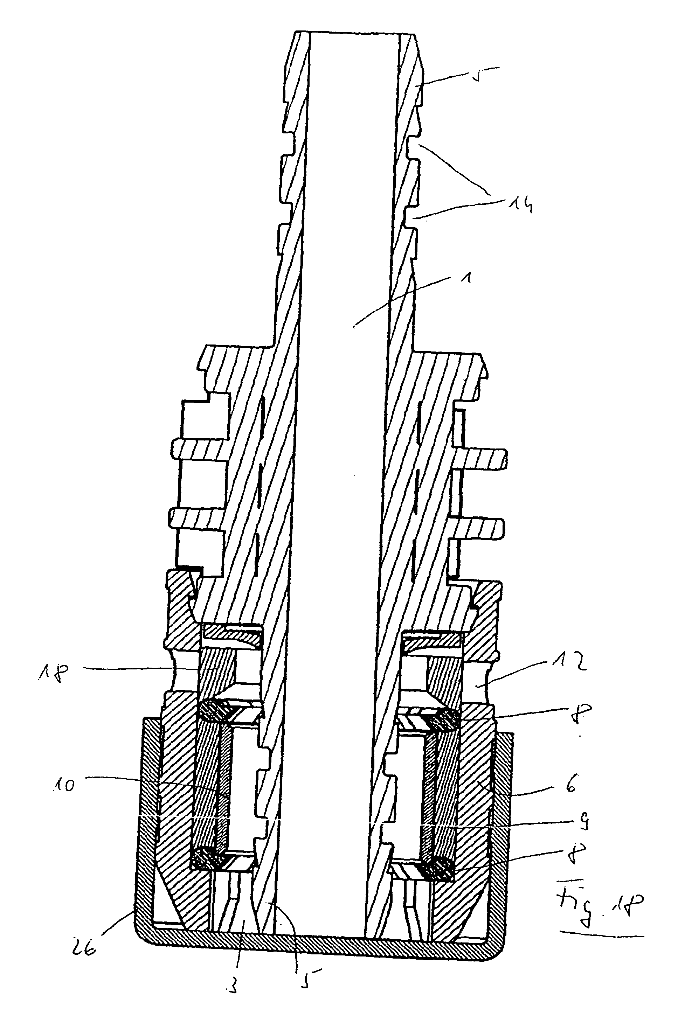

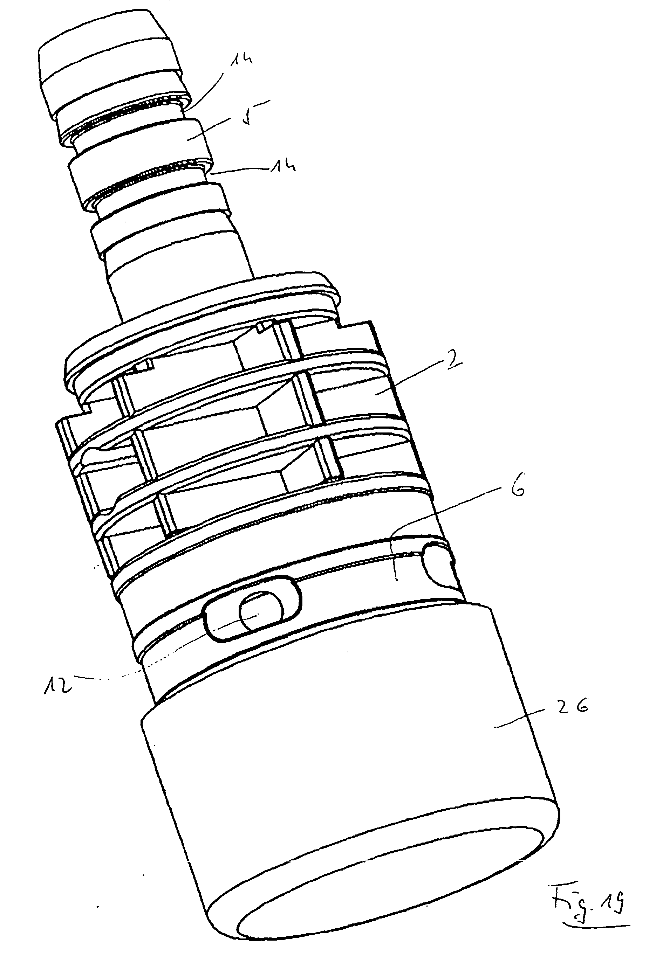

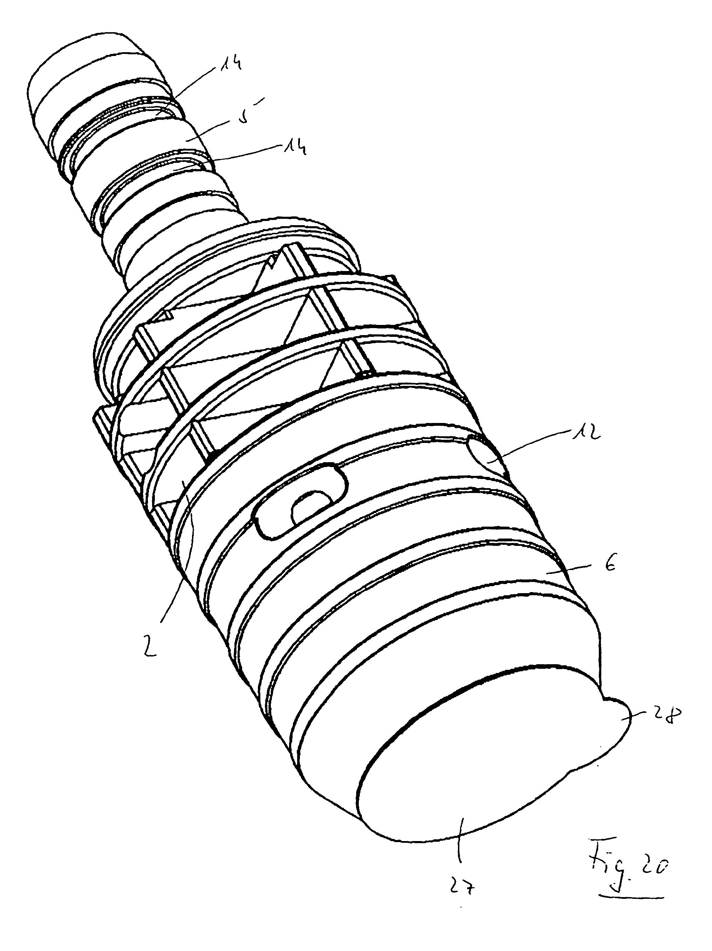

Die Fig. 16 und 17 zeigen eine weitere Ausgestaltungsvariante, bei welcher auf den Rohrstutzen 5 gemäß den vorstehend beschriebenen Ausführungsbeispielen verzichtet wurde. Wie erläutert, ist der Rohrstutzen 5 insbesondere für doppelwandige Rohre oder Mehrschicht-Rohre günstig, die an ihrer Innenwandung mittels Dichtungsringen oder O-Ringen abzudichten sind (auf die Darstellung der O-Ringe wurde in den vorangegangenen Figuren der Übersichtlichheit halber verzichtet, es sind lediglich die Ringnuten 14 gezeigt). Bei einem einschichtigen Rohr ist somit der Rohrstutzen 5 nicht oder nicht unbedingt erforderlich. Deshalb zeigen die Ausführungsbeispiele der Fig. 16 und 17 Konstruktionen ohne den Rohrstutzen 5. Im Falle der Fig. 16 ist lediglich ein Rastring 8 vorgesehen, während die Fig. 17 zwei Rastringe 8 zeigt. In beiden Fällen ist am hinteren Endbereich der Einsteckausnehmung 3 eine Klickscheibe (Klickring) 13 dargestellt, welche nachfolgend in Zusammenhang mit den Fig. 21 und 22 im Einzelnen noch beschrieben werden wird. Die Fig. 16 und 17 zeigen jeweils zwei O-Ringe 23. Weiterhin ist in diesen Ausführungsbeispielen der Grundkörper 2 rohrartig verlängert, sodass sich eine verkürzte Rasthülse 6 ergibt. Auch wie bei den vorangegangenen Ausführungsbeispielen ist die Rasthülse 6 erforderlich, um die Rastringe 8, die Klickscheibe 13 sowie andere Bauteile zu montieren. Es wäre somit auch bei den vorangegangenen Ausführungsbeispielen möglich, eine verkürzte Rasthülse 6 sowie einen verlängerten Grundkörper 2 zu verwenden, so wie dies in den Fig. 16 und 17 dargestellt ist.

Die Ausführungsbeispiele der Fig. 16 und 17 umfassen, wie erläutert, jeweils zwei O-Ringe 23, welche mittels Distanzringen 24, 25 auf Position gehalten sind.

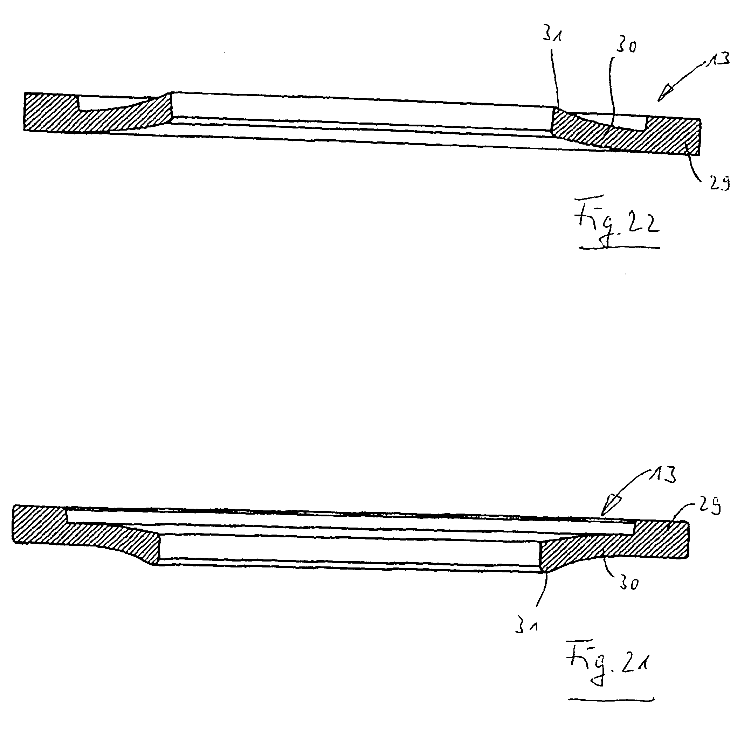

Wie bereits in Zusammenhang mit den vorangehenden Ausführungsbeispielen erläutert, ist es vorteilhaft, wenn die Rasthülse 6 oder ein verlängerter Bereich des Grundkörpers 2 mit zumindest einem Sichtfenster 12 versehen ist. Dieses ist zur Innenseite hin mittels eines transparenten Fensterrings 18 oder eines anderen, geeigneten Bauelements bleibend abgedichtet. Hierdurch wird verhindert, dass Schmutzpartikel oder Ähnliches in den Einsteckraum 3 eindringen. Diese sind nicht nur im Hinblick auf die Hygiene, sondern auch im Hinblick auf die Funktionssicherheit des Steckfittings unerwünscht. Da beispielsweise die O-Ringe eingefettet sind, lassen sich eingedrungene Stauboder Schmutzpartikel praktisch nicht mehr entfernen, sodass der Steckfitting unbrauchbar würde. Aus diesem Grunde zeigen die Fig. 18 bis 20 weitere Varianten, bei welchen ein "Hygiene-Verschluss" vorgesehen ist. Dieser umfasst bei den Ausführungsbeispielen der Fig. 18 und 19 eine Verschlusskappe 26, welche entweder auf die Rasthülse 6 oder den Grundkörper 2 aufgebracht ist und nach ihrer Entfernung nicht wieder angebracht werden kann (beispielsweise dadurch, dass die Rastverbindung zerstört wird). In Fig. 20 ist ein Ausführungsbeispiel dargestellt, bei welchem eine Verschlussfolie 27 aufgeklebt oder verschweißt ist, die beispielsweise mittels einer Lasche 28 abgerissen werden kann. In jedem Falle ist sichergestellt, dass ein einmal geöffneter Fitting nicht wieder "hygienisch" verschlossen werden kann. Eine Abdichtung der Durchgangsausnehmung 1 ist nicht unbedingt erforderlich, da diese durch das Medium gespült werden kann. Es ist selbstverständlich auch möglich, am anderen Endbereich des Steckfittings einen Verschluss anzubringen.

Die Fig. 21 und 22 zeigen in vergrößerter Darstellung die Klickscheibe, welche präziser als Klickring bezeichnet werden kann. Diese umfasst einen relativ starren Außenring 29, mit welchem einstückig ein weicherer, elastischer Ringkörper 30 verbunden ist. Dessen freies Ende geht in einen verstärkten Innenwulst 31 über. Die Fig. 21 zeigt die Klickscheibe (Klickring) 13 in der Ausgangsposition, so wie sie auch in den vorangegangenen Figuren dargestellt ist. Bei einem Einschieben eines Rohrendes erfolgt eine Druckbelastung auf den Innenwulst 31. Dieser kann sich, ebenso wie der Außenring 29, nur unwesentlich elastisch verformen. Somit bewirkt eine Druckbeaufschlagung auf den Innenwulst 31 eine Verformung des Ringkörpers 30. Dieser springt ab einer bestimmten Belastung von der in Fig. 21 gezeigten Stellung in die in Fig. 22 gezeigte Position, wobei dieses Umklicken oder sprunghafte Umschlagen zu einem Anstoßen des Innenwulst 31 an der stirnseitigen Wandung der Einsteckausnehmung 3 bzw. des Grundkörpers 2 führt. Hierbei ergibt sich ein deutliches Geräusch, welches ganz klar wahrnehmbar ist. Somit erzeugt ein vollständiges Einschieben des Rohrendes in den Steckfitting ein ganz deutliches Klickgeräusch.

Es versteht sich, dass die Konstruktion und Verwendung der Klickscheibe (Klickring) 13 nicht auf die gezeigten Konstruktionen des Steckfittings beschränkt sind, sondern auch bei anderen Ausgestaltungsformen anwendbar sind. Die Klickscheibe 13 kann auch einstückig mit dem Fensterring 18 ausgebildet werden. Gleiches gilt für den in Zusammenhang mit den Ausführungsbeispielen der Fig. 18 bis 20 beschriebenen "Hygieneverschluss".

Aus der oben stehenden Beschreibung der Klickscheibe (Klickring) ist ersichtlich, dass die Geräuschentwicklung bei der Verformung von der in Fig. 21 gezeigten Position in die Position gemäß Fig. 22 nur einmal auftritt. Der Klickring federt nicht zurück, sodass bei einem Entfernen des Rohrendes und einem nochmaligen Einschieben kein Klickgeräusch mehr hörbar ist. Auch hierdurch wird der Benutzer gewarnt, dass der Steckfitting schon bereits verwendet wurde.

Durch die erfindungsgemäß vorgesehene Klickscheibe ist zudem eine Trennung zwischen dem Grundkörper 2 und dem Rohr 4 gewährleistet. Insbesondere bei Rohren mit einer äußeren Metallschicht, beispielsweise aus Aluminium, und bei einer Herstellung des Grundkörpers 2 aus Messing werden somit direkte Berührungen dieser beiden Metalle vermieden, die ansonsten zu Korrosionsproblemen führen können. Es kann somit keine Elektrolyse und eine daraus resultierende chemische Reaktion erfolgen, da eine stoffliche Trennung vorliegt.

Der erfindungsgemäße Steckfitting kann, wie erläutert, entweder vollständig aus Kunststoff gefertigt sein. Es ist jedoch auch möglich, einzelne Teile aus Kunststoff und andere Teile aus Metall zu fertigen oder den Steckfitting komplett aus Metall herzustellen.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

### Bezugszeichenliste

- 1: Durchgangsausnehmung
- 2: Grundkörper
- 3: Einsteckausnehmung
- 4: Rohr
- 5: Rohrstutzen
- 6: Rasthülse
- 7: Kralle
- 8: Rastring
- 9: Distanzhülse
- 10: Schiebehülse
- 11: Werkzeug
- 12: Sichtfenster
- 13: Klick-Scheibe/-Ring
- 14: Ringnut
- 15: Krallringe
- 16: Rastmittel
- 17: Ausnehmung
- 18: Fensterring
- 19: Handstück
- 20: Ringkörper
- 21: hinterer Endbereich
- 22: Schweißmuffe
- 23: O-Ring
- 24: Distanzring
- 25: Distanzring
- 26: Verschlusskappe
- 27: Verschlussfolie
- 28: Lasche
- 29: Außenring
- 30: Ringkörper
- 31: Innenwulst
- 32: Zwischenbereich
- 33: mit Schneiden versehener Bereich
- 34: Schneide

## Patentansprüche

1. Rastring zur Verbindung eines Fittings mit einem Rohr (4), wobei der Rastring (8) mit Krallen (7) versehen ist, **dadurch gekennzeichnet, dass** der Rastring (8) einen mit einem im Wesentlichen kreisförmigen Querschnitt versehenen, durch Torsion verformbaren geschlossenen Ringkörper (20) umfasst, an welchem zum Innenraum des Ringkörpers (20) weisende Krallen (7) angeordnet sind, dass die Kralle (7) mit zumindest einer im Wesentlichen in der Ebene des Ringkörpers (20) angeordneten Schneide (34) versehen ist, wobei die Schneiden (34) der Krallen (7) auf einem Kreis angeordnet sind, und dass ein durch Torsion verformbarer Zwischenbereich (32) zwischen den Krallen (7) mit einem kleineren Durchmesser und/oder einem kleineren Querschnitt als der Bereich (33) der Krallen (7) versehen ist.

2. Rastring nach Anspruch 1, **dadurch gekennzeichnet, dass** der Rastring (8) aus Kunststoff und/oder aus verschiedenen Kunststoffen gefertigt ist.

3. Rastring nach einem der Ansprüche 1 oder 2, **dadurch gekennzeichnet, dass** der Rastring (8) aus Metall gefertigt ist.

4. Rastring nach einem der Ansprüche 1 bis 3, **dadurch gekennzeichnet, dass** die Kralle (7) an einem Bereich (33) ausgebildet ist, welcher einstückig mit benachbarten Zwischenbereichen (32) ausgebildet ist und einen größeren Durchmesser und/oder einen größeren Querschnitt als die Zwischenbereiche (32) aufweist.

## Claims

1. Latch ring for the connection of a fitting to a pipe (4), the latch ring (8) being provided with claws (7), **characterised in that** the latch ring (8) includes a closed ring body (20) which is provided with a substantially circular cross-section and deformable by torsion and on which are arranged claws (7) pointing towards the interior of the ring body (20), **in that** the claw (7) is provided with at least one cutting edge (34) arranged substantially in the plane of the ring body (20), the cutting edges (34) of the claws (7) being arranged in a circle, and **in that** an intermediate region (32) between the claws (7) which is deformable by torsion is provided with a smaller diameter and/or a smaller cross-section than the region (33) of the claws (7).

2. Latch ring according to claim 1, **characterised in that** the latch ring (8) is made of plastic and/or different plastics.

3. Latch ring according to either of claims 1 or 2, **characterised in that** the latch ring (8) is made of metal.

4. Latch ring according to any of claims 1 to 3, **characterised in that** the claw (7) is formed on a region (33) which is constructed in one piece with adjacent intermediate regions (32) and has a larger diameter and/or a larger cross-section than the intermediate regions (32).

## Revendications

1. Bague encliquetable destinée à assembler un raccord à un tuyau (4), la bague encliquetable (8) étant pourvue de griffes (7), **caractérisée en ce que** la bague encliquetable (8) comprend un corps annulaire (20) fermé, déformable par torsion, présentant une section transversale sensiblement circulaire, sur lequel sont disposées des griffes (7) orientées vers l'intérieur du corps annulaire (20), **en ce que** la griffe (7) présente au moins un tranchant (34) situé sensiblement dans le plan du corps annulaire (20), les tranchants (34) des griffes (7) étant disposés sur un cercle, et **en ce qu'**un espace intermédiaire (32) entre les griffes (7), déformable par torsion, présente un diamètre plus petit et/ou une section plus réduite que la zone (33) des griffes (7).

2. Bague encliquetable selon la revendication 1, **caractérisée en ce que** la bague encliquetable (8) est constituée en matière synthétique et/ou en différentes matières synthétiques.

3. Bague encliquetable selon l'une des revendications 1 ou 2, **caractérisée en ce que** la bague encliquetable (8) est constituée en métal.

4. Bague encliquetable selon l'une des revendications 1 à 3, **caractérisée en ce que** la griffe (7) est constituée par une zone (33) qui ne forme qu'une seule pièce avec les zones intermédiaires (32) adjacentes, et qui présente un diamètre plus important et/ou une section plus importante que les zones intermédiaires (32).
